Europäisches Patentamt

European Patent Office

Office européen des brevets

(11) Veröffentlichungsnummer : **0 189 829**
**B1**

(12) **EUROPÄISCHE PATENTSCHRIFT**

(45) Veröffentlichungstag der Patentschrift :
15.06.88

(21) Anmeldenummer : 86100747.4

(22) Anmeldetag : 21.01.86

(51) Int. Cl.⁴ : **B 63 H 23/34, F 16 J 15/40**

(54) Verfahren zum Entfernen der Leckflüssigkeit aus einem Leckageraum und hierfür vorgesehene Abdichtungsanordnung einer Propellerwelle.

(30) Priorität : 25.01.85 DE 3502395

(43) Veröffentlichungstag der Anmeldung :
06.08.86 Patentblatt 86/32

(45) Bekanntmachung des Hinweises auf die Patenterteilung : 15.06.88 Patentblatt 88/24

(84) Benannte Vertragsstaaten :
DE FR GB NL SE

(56) Entgegenhaltungen :
DE-A- 2 756 080
DE-A- 3 122 407

(73) Patentinhaber : BLOHM + VOSS AG
Hermann-Blohm Strasse 3
D-2000 Hamburg 11 (DE)

(72) Erfinder : von Bergen, Ernst-Peter
D-2372 Ahlefeld (DE)

(74) Vertreter : Hansmann, Dierk, Dipl.-Ing.
Jessenstrasse 4
D-2000 Hamburg 50 (DE)

## Beschreibung

Die Erfindung bezieht sich auf eine Abdichtungsanordnung für eine Propellerwelle oder eine ähnliche Welle für einen Antrieb bei einem Schiff oder einer schwimmenden Plattform, wobei die Abdichtung einen Leckageraum zum Sammeln von eindringenden Leckflüssigkeiten enthält und sich an einem tief in das Wasser ragenden Bauteil befindet, und auf ein Verfahren zum Entfernen der Leckflüssigkeit aus dem Leckageraum.

Es wurden schon Abdichtungen vorgeschlagen (DE-A-3 122 407), die eine wasserseitige Gleitringdichtung und innere Lippendichtungen, die eine Ölkammer bilden, sowie zwischen dieser Wasserdichtung und der Öldichtung einen Leckageraum mit einer Ablaufleitung für eindringende Leckflüssigkeiten enthalten. Diese Abdichtungen setzen jedoch voraus, daß die Leckflüssigkeiten aus dem Leckageraum in einen tiefer angeordneten Behälter oder in die Bilge abfließen können. Sie sind daher nicht geeignet, wenn sich ein solcher Behälter und die zu ihm führenden Leitungen nicht unterhalb der Propellerwelle anordnen lassen.

Die üblichen Lippendichtungen haben sich insbesondere als Öldichtungen bewährt, solange die Druckdifferenz an ihnen nicht außerordentlich groß wird. Der jeweils höhere Druck drückt die Lippe der Dichtung an die Welle oder deren Laufbuchse an. Bei Abdichtungen in größeren Wassertiefen müssen daher Maßnahmen vorgesehen werden, die das Auftreten einer großen Druckdifferenz an einer Lippendichtung verhindern, die einen anschließenden, mit Öl gefüllten Raum gegen das Eindringen von Wasser schützt, das bei einer schadhaften wasserseitigen Dichtung oder bei besonderen Betriebsbedingungen in stärkerem Ausmaß in den Leckageraum gelangen könnte.

Der Erfindung liegt die Aufgabe zugrunde, bei einer Abdichtungsanordnung für eine Propellerwelle, die gegebenenfalls auch in größerer Wassertiefe eingesetzt werden soll, die Sicherheit gegen das Eindringen von Wasser in einen ölgefüllten Raum zu verbessern und insbesondere die in einen Leckageraum zwischen einer wasserseitigen Gleitringdichtung und einer Öldichtung einsickernden Leckflüssigkeiten in einen Sammelbehälter abzuleiten, der nicht unterhalb der Abdichtungsanordnung angebracht werden kann.

Diese Aufgabe wird durch die in Anspruch 1 genannten Maßnahmen gelöst. Eine Abdichtungsanordnung zur Anwendung des Verfahrens nach Anspruch 1 ist in Anspruch 2 angegeben. Die Unteransprüche geben bevorzugte weitere Ausgestaltungen an.

Bei laufender Propellerwelle tritt ein wenig Wasser durch die Gleitringdichtung hindurch, was zur Schmierung der Dichtung sogar erwünscht sein kann. Dieses Wasser sammelt sich im Leckageraum und wird erfindungsgemäß durch Druckluft periodisch über eine Leckleitung in einen höher gelegenen Sammelbehälter gedrückt, aus dem es von Zeit zu Zeit mittels einer Pumpe abgepumpt wird. Etwa aus der Ölkammer in den Leckageraum sickerndes Öl wird in derselben Weise mit dem Wasser entfernt. Der Luftdruck wird so gewählt, daß er genügt, die Leckflüssigkeiten in den Sammelbehälter zu drücken, der den jeweiligen Einbauverhältnissen entsprechend möglichst nahe oberhalb der Abdichtungsanordnung angebracht werden sollte. Der Luftdruck ist niedriger als der Öldruck in der Ölkammer. Er entlastet damit die Lippendichtung zwischen Leckageraum und Ölkammer, hebt sie aber nicht ab, so daß sie ihre das Öl zurückhaltende Funktion behält.

In einer bevorzugten Ausführung steht der Leckageraum normalerweise unter atmosphärischem Druck. Der Leckageraum kann sich allmählich mit Leckflüssigkeiten wenigstens teilweise füllen. Druckluft wird nur periodisch für kurze Zeit zugeführt, um den Leckageraum jeweils wieder weitgehend zu entleeren.

Bei einem plötzlichen starken Wassereinbruch könnte die normale Entleerung des Leckageraums mittels Druckluft nicht ausreichen, und es würde Wasser unter gegebenenfalls höherem Druck in die Ölkammer eindringen. Die Ölkammer ist daher mit einer Ölleitung mit einem Überdruckventil versehen, das eine Verbindung zum Sammelbehälter öffnen kann. Hierdurch wird ein Überdruck an der Lippendichtung zwischen Ölkammer und anschließendem Raum abgebaut, so daß auch in diesem Fall noch ein weiterer Betrieb ohne durch große Druckdifferenz erzeugten übermäßigen Verschleiß dieser Dichtung möglich ist.

Der an die Ölkammer innen anschließende, ölgefüllte Raum kann zu einem Lager für die Welle und/oder zu einem Getriebe gehören. Wenn in diesem Raum etwa derselbe Öldruck herrscht wie in der Ölkammer, kann Öl von dem Raum durch die Dichtung in die Ölkammer gelangen. In einer bevorzugten Ausbildung ist aber vorgesehen, in der Ölkammer einen etwas höheren Druck aufrechtzuerhalten. Hierzu kann Öl über die vorgenannte Ölleitung oder eine gesonderte Leitung mit entsprechendem Druck zugeführt werden.

Unabhängig vom äußeren Wasserdruck beziehungsweise der Eintauchtiefe werden Regelventile und die Druckverhältnisse beeinflussende höher liegende Behälter so eingestellt und angeordnet, daß der Luftdruck ausreicht, Leckflüssigkeit in den Sammelbehälter zu drücken, daß der Druck in der Ölkammer höher als der Luftdruck und vorzugsweise auch etwas höher als der Öldruck in dem anschließenden Raum ist, in dem der Druck jedoch etwas über dem Luftdruck liegt, und daß bei Übersteigen eines maximalen Druckes in der Ölkammer ein Abfluß in den Sammelbehälter ermöglicht wird, der unter atmosphärischem Druck steht und der durch eine von seinem Füllstand gesteuerte Pumpe nach oben zu weiteren Behältern oder Tanks entleert werden kann.

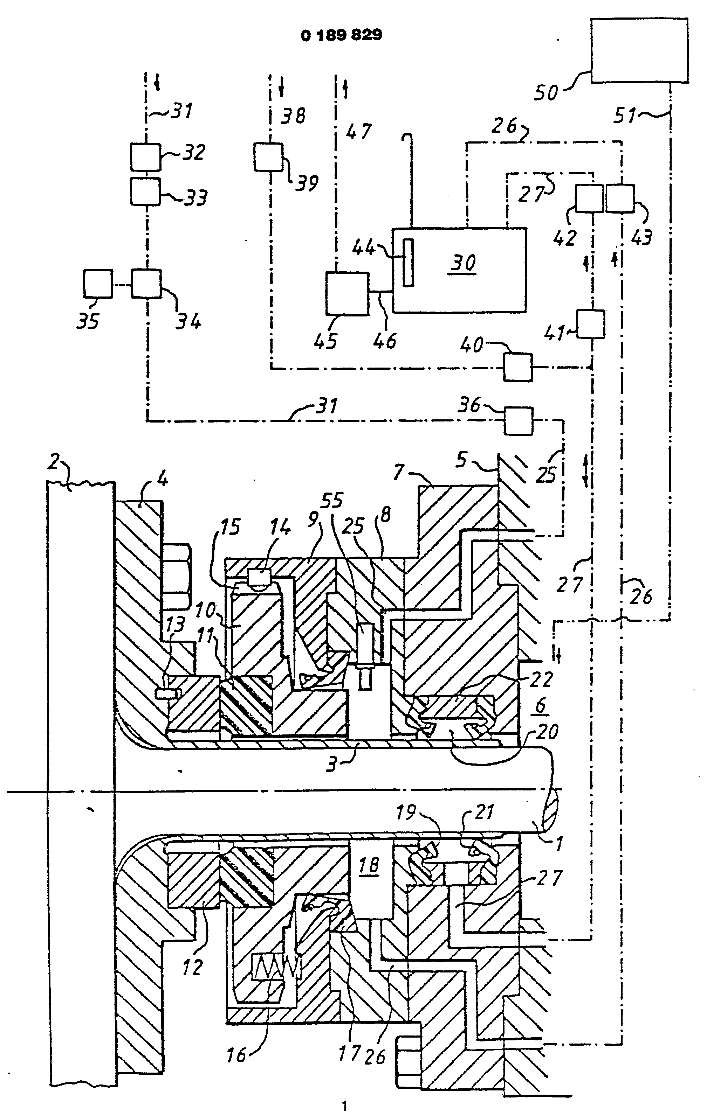

Weitere Einzelheiten der Erfindung werden anhand der beigefügten Zeichnung beschrieben, die nur schematisch eine Abdichtungsanordnung und die mit ihr verbundenen Leitungen zeigt.

Die Propellerwelle 1 ist an ihrem Ende mit einem Flansch 2 versehen, an dem der nicht dargestellte Propeller angebracht werden kann. Auf der Welle 1 sitzt eine Laufbuchse 3, die ebenfalls einen Flansch 4 besitzt, der an den Flansch 2 angeschraubt wird. Die Abdichtungsanordnung wird an eine Befestigungsfläche 5 angeschraubt, die zu einem nicht näher dargestellten Teil eines Schiffes oder ähnlichen Gegenstandes gehört, der einen ölgefüllten Raum 6 enthält, in dem sich das innere Ende der Welle 1 erstreckt.

Die Abdichtungsanordnung umfaßt die Gehäuseringe 7, 8 und 9 sowie einen beweglichen Aufnahmering 10 für einen Gleitring 11, der beispielsweise aus Kohle geformt ist. Ein Gegenring 12 aus Metall ist an dem Flansch 4 angebracht und wird durch mindestens einen Stift 13 gegen eine Verdrehung im Bezug auf diesen Flansch gesichert. Der Aufnahmering 10 wird durch Stifte 14, die in Nuten 15 am Umfang dieses Ringes eingreifen, gegen ein Drehen mit der Welle gesichert und durch Federn 16 sowie den hydraulischen Druck gegen den Gegenring 12 gedrückt.

Eine stationäre Lippendichtung 17 ist vorgesehen, um den Spalt zwischen dem beweglichen Aufnahmering 10 und den übrigen Gehäuseringen abzudichten. Zwischen der Gleitringdichtung 11, 12 und einer Ölkammer 20 ist ein Leckageraum 18 angeordnet. Die Ölkammer 20 wird durch eine erste Lippendichtung 19 und eine zweite Lippendichtung 21 begrenzt. Die Lippen dieser beiden Dichtungen sind einander zugekehrt, so daß sie durch den Druck in der Ölkammer 20 angedrückt werden, wenn dieser höher als in den benachbarten Räumen ist. Zwischen den Dichtungen 19, 21 ist zu ihrer Befestigung ein Halterungsring 22 angeordnet. Unten in dem Leckageraum 18 beginnt eine Leckleitung 26, durch die eingedrungene Leckflüssigkeiten abgeführt werden können.

Erfindungsgemäß ist oben an der Leckkammer 18 eine Luftleitung 25 angeordnet. Durch sie wird Luft in den Leckageraum 18 eingedrückt. Die Leckleitung 26 verläuft durch die Befestigungsfläche 5 und weiter nach oben bis zu einem höher gelegenen Sammelbehälter 30. In den Leckageraum 18 und den unteren Teil der Leckleitung 26 gelangende Leckflüssigkeiten werden durch den Luftdruck und gegebenenfalls in dem nach oben führenden Teil der Leckleitung 26 aufsteigende Luftblasen in den Sammelbehälter 30 gedrückt.

Die Druckluft wird über eine Zuleitung aus einem nicht dargestellten Druckluftsystem entnommen. In der Zuleitung 31 ist ein Druckbegrenzungsventil 32 angeordnet, das den Druck auf einen vorgegebenen Wert reduziert. Ein Luftfilter 33 ist zweckmäßig. In der Leitung 31 ist außerdem ein Absperrventil 34 angeordnet, das durch einen Intervallschalter angetrieben und periodisch geöffnet werden kann. Ein Rückschlagventil 36 verhindert das Eindringen von plötzlich auftretendem Wasser unter höherem Druck in die Luftleitung 31. Der Intervallschalter 35 wird so eingestellt, daß sich das Absperrventil 34 öffnet, wenn der Leckageraum 18 teilweise mit Leckflüssigkeiten gefüllt ist, und daß es solange geöffnet bleibt, bis die Leckflüssigkeiten weitgehend aus dem Leckageraum 18 verdrängt sind. Der durch das Druckbegrenzungsventil 32 eingestellte Druck wird so gewählt, daß die Leckflüssigkeiten aus der Leckagekammer 18 in einer hinreichend kurzen Zeit entfernt werden und in den Sammelbehälter 30 gefördert werden können. Der Luftdruck in der Leckagekammer 18 muß jedoch niedriger sein als der Öldruck in der Ölkammer 20.

Von der Ölkammer 20 verläuft eine Ölleitung 27 über ein Überdruckventil 41 zu dem Sammelbehälter 30. Wenn von den benachbarten Räumen 6 und 18 Flüssigkeit in die Ölkammer 20 eindringt, kann sich in ihr ein unerwünscht hoher Druck aufbauen, der eine unzulässig große Druckdifferenz an einer oder beiden Lippendichtungen schafft. Dies wird durch die Ölleitung 27 mit dem Überdruckventil 41 verhindert.

Vorzugsweise ist der Öldruck in dem Raum 6 niedriger als in der Ölkammer 20. Unter gewissen dynamischen Betriebsverhältnissen wandert Öl aus dem Raum 6 durch die Dichtung 21 in die Ölkammer 20 ein und erhöht deren Druck über den des Raumes 6. Es ist daher in vielen Fällen nicht notwendig, eine besondere Ölzuleitung zu der Ölkammer 20 vorzusehen. Das dargestellt Ausführungsbeispiel zeigt jedoch eine solche Ölzuleitung aus einer Ölversorgungsleitung, die an ein geeignetes Drucköisystem angeschlossen ist. In der Ölversorgungsleitung 38 ist ein Druckreduzierventil 39 sowie ein Rückschlagventil 40 angeordnet. Die Leitung 38 mündet in die Ölleitung 27, so daß über sie wenigstens bei Betriebsbeginn eine Ölfüllung der Ölkammer 20 ermöglicht wird. Über die Leitung 38 wird Öl mit einem Druck zugeführt, der das Überdruckventil 41 noch nicht öffnet. Bei einer anderen, nicht dargestellten Ausführungsmöglichkeit kann die Ölzuleitung 38 auch oben in die Ölkammer 20 münden. An den zum Sammelbehälter 30 führenden Leitungen 26 und 27 können Kontrolleinrichtungen 42, 43 zur Feststellung eines Durchflusses angeordnet sein. An entfernt gelegenen, nicht dargestellten Anzeigegeräten kann somit eine Überwachung der Funktionen bezüglich der Abführung von Leckflüssigkeiten auf der Leckagekammer 18 und der Ölkammer 20 erfolgen und gegebenenfalls eine Änderung der Einstellung des Intervallschalters 35 sowie des Druckbegrenzungsventils 32 vorgenommen werden.

An dem Sammelbehälter 30 ist eine Füllstandsmeßeinrichtung 44 angeordnet, die eine Pumpe 45 steuert, welche über eine Leitung 46 die sich in dem Behälter sammelnde Flüssigkeit abzieht und durch eine Leitung 47 weiter nach oben pumpt.

Aus einem Hochtank 50 wird Öl über eine Leitung 51 in den Raum 6 nachgefüllt, wobei die Lage des Hochtanks 50 den Druck in dem Raum 6 bestimmt.

Für ein Ausführungsbeispiel, das für eine Wassertiefe von bis zu 60 m vorgesehen ist, wird Druckluft mit 1,4 bar (absolut) periodisch in den Leckageraum 18 eingeleitet. Der Sammelbehälter 30 muß in einer Höhe von etwas mehr als 3 m oberhalb der Abdichtungsanordnung angeordnet werden. Der Hochtank 50 wird in einer Höhe von etwa 5 m über der Abdichtung angebracht, so daß in dem Raum 6 ein Öldruck von 1,5 bar herrscht. Das Überdruckventil 41 wird so eingestellt, daß es sich etwa bei einem Öldruck von 1,7 bar öffnet. Die sich hieraus ergebenden Druckverhältnisse führen dazu, daß die Druckdifferenzen an den Lippendichtungen 19 und 21 relativ niedrig sind, was eine lange Lebensdauer dieser Dichtungen gewährleistet. Die Abführung der Leckflüssigkeiten aus der Leckagekammer mittels Druckluft verhindert, daß sich in dem Leckageraum 18 ein für die Lippendichtungen nachteiliger Druck aufbaut, wobei eine Förderung der Leckflüssigkeiten in den höher gelegenen Sammelbehälter in einer besonders einfachen Weise möglich ist. Eine ausreichende Abdichtung gegen das Eindringen von Wasser in den ölgefüllten Raum 6 wird jedoch auch in dem Falle noch erreicht, daß Wasser in größerer Menge in den Leckageraum 18 und gegebenenfalls weiter bis in die Ölkammer 20 eindringen sollte.

In weiterer Ausgestaltung der Abdichtungen kann in dem Leckageraum 18 eine Meßsonde 55 angeordnet sein, die auf den Flüssigkeitsstand anspricht und das Öffnen des Absperrventils 34 beeinflußt. Eine oben in dem Raum 18 angebrachte Meßsonde 55 kann den Intervallschalter 35 in kürzeren Zeitabständen als den vorgegebenen Perioden zum Öffnen des Ventils 34 für die vorbestimmte Zeit in Gang setzen, wenn die Menge der einsickernden Flüssigkeit zunehmen sollte. Es ist aber auch möglich, eine geeignete Meßsonde 55 anstelle des Intervallschalters 35 zu verwenden, die jeweils bei einem maximalen Füllstand in dem Raum 18 das Absperrventil 34 öffnet und bei minimalem Füllstand oder entleertem Raum 18 das Ventil 34 wieder schließt, so daß die Dauer der Luftzuführung und deren zeitliche Unterbrechung stets von der Menge der eindringenden Flüssigkeit geregelt werden.

Die erfindungsgemäße Abdichtungsanordnung mit einem oberhalb der Propellerwelle befindlichen Sammeltank und einer weiteren Abführung der Leckflüssigkeit nach oben ist insbesondere zur Verwendung bei Antrieben unten an den Beinen von schwimmenden Plattformen geeignet. Es ergeben sich aber auch Vorteile bei Schiffen, wenn die Erfindung beispielsweise bei einer hinteren Abdichtung einer Wellenhose eines Mehrschraubenschiffes oder bei tief am Heck angeordneten Stevenrohren verwendet wird.

Bei einwandfreien Dichtungselementen dringt nur wenig Leckflüssigkeit in den Leckageraum ein, so daß es genügen kann, die Druckluft zur Entleerung nur etwa zweimal täglich zuzuführen. Der Verbrauch an Druckluft ist daher sehr gering. Da die Druckluft im wesentlichen auf die Flüssigkeitsoberfläche im Leckageraum wirkt, tritt keine Vermischung von Luft und Flüssigkeit und keine für die Förderung der Flüssigkeit nachteilige Schaumbildung auf. Die vorgesehene periodische Anwendung der Druckluft ergibt für die im Beispiel dargestellten und ähnliche Dichtungselemente keine beachtliche Beeinflussung und keine Nachteile.

## Patentansprüche

1. Verfahren zur Entfernung der Leckflüssigkeit aus einem Leckageraum einer Abdichtungsanordnung für eine Propellerwelle (1), wobei sich der Leckageraum (18) zwischen einer wasserseitigen Gleitringdichtung (11, 12) und einer durch Lippendichtungen (17) begrenzten Ölkammer (20) befindet und mit einer oben mündenden Zuleitung sowie einer Ablaufleitung (26) versehen ist, dadurch gekennzeichnet, daß durch die Zuleitung (25) Druckluft periodisch mit einem zur Förderung der eingedrungenen Leckflüssigkeit in einen höher gelegenen Sammelbehälter (30) ausreichenden Druck eingeleitet wird.

2. Abdichtungsanordnung für eine Propellerwelle (1) zur Anwendung des Verfahrens nach Anspruch 1, wobei die Abdichtungsanordnung aus einer wasserseitigen Gleitringdichtung (11, 12), einem Leckageraum (18) mit einer oberen Zuleitung (25) und einer Ablaufleitung (26) für durch die Dichtungen eindringende Leckflüssigkeiten und aus einer durch Lippendichtungen (17) begrenzten Ölkammer (20) besteht, dadurch gekennzeichnet, daß die Leckleitung (26) unten am Leckageraum (18) beginnt und aufwärts in einen oberhalb der Abdichtungsanordnung gelegenen Sammelbehälter (30) verläuft und in der oben in den Leckageraum mündenden Druckluftleitung (31, 25) ein Druckbegrenzungsventil (32) angeordnet ist, durch das der Luftdruck im Leckageraum (18) so geregelt wird, daß er stets niedriger als der Öldruck in der benachbarten Ölkammer ist, aber zeitweise ausreicht, um Leckflüssigkeit in den Sammelbehälter zu drücken.

3. Abdichtungsanordnung nach Anspruch 1 oder 2, dadurch gekennzeichnet, daß ein Absperrventil (34) in der Druckluftleitung (31, 26) mit einem Intervallschalter (35) verbunden ist, der die Zufuhr von Druckluft in einstellbaren zeitlichen Abständen und jeweils für eine einstellbare Zeit ermöglicht.

4. Abdichtungsanordnung nach einem der Ansprüche 1 bis 3, dadurch gekennzeichnet, daß die Ölkammer (20) mit einer Ölleitung (27) verbunden ist, an der sich ein Überdruckventil (41) befindet, das bei Überschreiten eines vorgegebenen Drucks in der Ölkammer (20) die Ölleitung (27) zum Sammelbehälter (30) hin öffnet.

5. Abdichtungsanordnung nach einem der Ansprüche 1 bis 4, dadurch gekennzeichnet, daß die Ölkammer (20) über eine Ölleitung (27), in der sich ein Druckreduzierventil (39) befindet, mit einer Öl unter Druck zuführenden Versorgungsleitung (38) verbunden ist, wobei der Druck des Öls in der Ölkammer (20) höher als der Druck in dem anschließenden, ölgefüllten Raum (6) und höher als der Luftdruck in dem Leckageraum (18) gehalten ist.

6. Abdichtungsanordnung nach einem der Ansprüche 1 bis 5, dadurch gekennzeichnet, daß an dem Sammelbehälter (30) eine vom Füllstand gesteuerte Pumpe (45) angeordnet ist.

7. Abdichtungsanordnung nach einem der vorangehenden Ansprüche, dadurch gekennzeichnet, daß in dem Leckageraum (18) eine Meßsonde (55) angeordnet ist, durch die der Flüssigkeitsspiegel in dem Leckageraum (18) meßbar und das Öffnen des Absperrventils (34) in der Druckluftleitung beeinflußbar ist.

**Claims**

1. A method of removal of seepage from a leakage space in a sealing arrangement for a propeller shaft (1), where the leakage space (18) lies between a slidering seal (11, 12) next the water and an oil chamber (20) bounded by lip seals (17) and is provided with a feedline opening into it at the top as well as a discharge line (26), characterized in that through the feedline (25) compressed air is admitted periodically at a pressure adequate for conveying the seepage which has penetrated, into a collector (30) placed at a higher level.

2. A sealing arrangement for a propeller shaft (1) for the application of the method as in Claim 1, where the sealing arrangement consists of a slidering seal (11, 12) next the water, a leakage space (18) having an upper feedline (25) and a discharge line (26) for seepage penetrating through the seals, and of an oil chamber (20) bounded by lip seals (17), characterized in that the leakage line (26) starts at the bottom of the leakage space (18) and runs upwards into a collector (30) placed above the sealing arrangement and in the compressed air line (31, 25) opening into the leakage space at the top a pressure-limiting valve (32) is arranged, through which the air pressure in the leakage space (18) is so regulated that it is constantly lower than the oil pressure in the adjacent oil chamber but from time to time is adequate for forcing seepage into the collector.

3. A sealing arrangement as in Claim 1 or 2, characterized in that a shutoff valve (34) is connected in the compressed air line (31, 26) with an interval switch (35) which enables the feed of compressed air at adjustable intervals of time and at any time for an adjustable time.

4. A sealing arrangement as in one of the Claims 1 to 3, characterized in that the oil chamber (20) is connected to an oil line (27) in which there is an overpressure valve (41) which upon a predetermined pressure in the oil chamber (20) being exceeded opens the oil line (27) towards the collector (30).

5. A sealing arrangement as in one of the Claims 1 to 4, characterized in that the oil chamber (20) is connected via an oil line (27) in which there is a pressure-reducing valve (39), to a supply line (38) feeding oil under pressure, so that the pressure of the oil in the oil chamber (20) is kept higher than the pressure in the adjoining oil-filled space (6) and higher than the air pressure in the leakage space (18).

6. A sealing arrangement as in one of the Claims 1 to 5, characterized in that on the collector (30) a pump (45) is arranged, which is controlled from the state of fill.

7. A sealing arrangement as in one of the preceding Claims, characterized in that in the leakage space (18) a measuring probe (55) is arranged, by which the level of liquid in the leakage space (18) may be measured and the opening of the shutoff valve (34) in the compressed air line may be influenced.

**Revendications**

1. Procédé pour éliminer le liquide de fuite d'un espace de fuite d'un dispositif d'étanchéité pour un arbre porte-hélice (1), l'espace de fuite (18) se trouvant entre une garniture d'étanchéité à anneaux à glissement (11, 12), prévue côté eau, et une chambre à huile (20), limitée par des garnitures d'étanchéité à lèvre (19, 21), et étant muni d'un conduit d'arrivée (25) débouchant vers le haut, ainsi que d'un conduit d'écoulement ou de sortie (26), le procédé étant caractérisé en ce que par le conduit d'arrivée (25), de l'air sous pression est amené périodiquement dans l'espace de fuite (18) à une pression qui est suffisante pour faire passer le liquide de fuite s'étant introduit dans cet espace de fuite, dans un réservoir collecteur (30) se trouvant à un niveau supérieur.

2. Dispositif d'étanchéité pour un arbre porte-hélice (1), destiné à l'application du procédé suivant la revendication 1, dispositif d'étanchéité qui est formé d'une garniture d'étanchéité à anneaux à glissement (11, 12), prévue côté eau, d'un espace de fuite (18), muni d'un conduit d'arrivée supérieur (25) et d'un conduit d'écoulement ou de sortie (26) pour les liquides de fuite passant par les garnitures d'étanchéité, ainsi que d'une chambre à huile (20), limitée par des garnitures d'étanchéité à lèvre (19, 21), le dispositif d'étanchéité étant caractérisé en ce que le conduit d'écoulement ou de sortie (26) part de la partie inférieure de l'espace de fuite (18) et s'élève vers un réservoir collecteur (30) se trouvant au-dessus du dispositif d'étanchéité, et en ce que, dans le conduit à air sous pression (31, 25), qui débouche dans l'espace de fuite, à la partie supérieure de celui-ci, il est prévu une valve de limite de pression (32), par laquelle la pression d'air régnant dans l'espace de fuite (18) est réglée pour qu'elle soit toujours plus faible que la pression d'huile régnant dans la chambre à huile, qui est voisine de l'espace de fuite, mais qu'elle suffise à chasser par intervalles le liquide de fuite dans le réservoir collecteur.

3. Dispositif d'étanchéité suivant l'une ou l'autre des revendications 1 et 2, caractérisé en ce qu'il comporte une valve d'arrêt (34), montée dans le conduit à air sous pression (31, 25), valve d'arrêt (34) qui est reliée à un interrupteur agissant par intervalles (35), lequel permet l'arrivée d'air sous pression à des intervalles de temps pouvant être réglés, et ce, toujours pour un laps de temps pouvant, lui aussi, être réglé.

4. Dispositif d'étanchéité suivant l'une quelconque des revendications 1 à 3, caractérisé en ce que la chambre à huile (20) est reliée à un conduit à huile (27) dans lequel se trouve une valve de surpression ou de sûreté (41), qui, en cas de dépassement d'une pression donnée dans la chambre à huile (20), ouvre le conduit à huile (27) en direction du réservoir collecteur (30).

5. Dispositif d'étanchéité suivant l'une quelconque des revendications 1 à 4, caractérisé en ce que la chambre à huile (20) est en communication, par le conduit à huile (27), avec un conduit d'alimentation (38) destiné à amener de l'huile sous pression, dans lequel se trouve une valve de réduction de pression (39), la pression de l'huile se trouvant dans la chambre à huile (20) étant plus élevée que la pression régnant dans l'espace (6), rempli d'huile, voisin de cette chambre et étant plus élevée que la pression d'air régnant dans l'espace de fuite (18).

6. Dispositif d'étanchéité suivant l'une quelconque des revendications 1 à 5, caractérisé en ce qu'au réservoir collecteur (30) est reliée une pompe (45) qui est commandée par le niveau de remplissage.

7. Dispositif d'étanchéité suivant l'une quelconque des revendications précédentes, caractérisé en ce que dans l'espace de fuite (18), il est prévu une tête de mesure (55), au moyen de laquelle le niveau du liquide se trouvant dans l'espace de fuite (18) peut être mesuré et par laquelle l'ouverture de la valve d'arrêt (34) qui est prévue dans le conduit à air sous pression peut être influencée.

1